# FASCICULE DE BREVET EUROPEEN

(11) **EP 1 844 438 B1**
(45) Date de publication et mention de la délivrance du brevet: **14.03.2012**
(21) Numéro de dépôt: 06709150.4
(22) Date de dépôt: 23.01.2006
(51) Int. Cl.: G06T 5/00, G01S 15/00

(54) **PROCEDE ET SYSTEME DE SIMULATION OU DE SYNTHESE NUMERIQUE D'IMAGES ECHOGRAPHIQUES**
VERFAHREN UND SYSTEM ZUR SIMULATION ODER DIGITALEN SYNTHESE ECHOGRAPHISCHER BILDER
METHOD AND SYSTEM FOR THE SIMULATION OR DIGITAL SYNTHESIS OF ECHOGRAPHIC IMAGES

(30) Priorité: 24.01.2005 US 645595 P
(43) Date de publication de la demande: 17.10.2007
(73) Titulaire: Institut de Recherche sur les Cancers de l'Appareil Digestif IRCAD, 67000 Strasbourg (FR)
(72) Inventeur: HOSTETTLER, Alexandre, F-67000 STRASBOURG (FR); SOLER, Luc, F-67202 WOLFISHEIM (FR); FOREST, Clément, F-67100 STRASBOURG (FR); MARESCAUX, Jacques, F-SCHARRACHBERGHEIM (FR)
(74) Mandataire: Nuss, Pierre
(86) Numéro de dépôt international: PCT/FR2006/000150
(87) Numéro de publication internationale: WO 2006/077337

(56) Documents cités:
- US-B1- 6 210 168
- HOSTETTLER ALEXANDRE ET AL: "Real-time ultrasonography simulator based on 3D CT-scan images." STUDIES IN HEALTH TECHNOLOGY AND INFORMATICS. 2005, vol. 111, 26 janvier 2005 (2005-01-26), pages 191-193, XP009065886 ISSN: 0926-9630
- JENSEN J A ET AL: "Fast simulation of ultrasound images" 2000 IEEE ULTRASONICS SYMPOSIUM. PROCEEDINGS. AN INTERNATIONAL SYMPOSIUM (CAT. NO.00CH37121) IEEE PISCATAWAY, NJ, USA, vol. 2, 2000, pages 1721-1724 vol., XP010540945 ISBN: 0-7803-6365-5
- EHRICKE H H: "SONOSim3D: a multimedia system for sonography simulation and education with an extensible case database." EUROPEAN JOURNAL OF ULTRASOUND : OFFICIAL JOURNAL OF THE EUROPEAN FEDERATION OF SOCIETIES FOR ULTRASOUND IN MEDICINE AND BIOLOGY. AUG 1998, vol. 7, no. 3, août 1998 (1998-08), pages 225-300, XP002378671 ISSN: 0929-8266

## Description

La présente invention concerne le domaine des techniques d'imagerie et d'exploration, notamment dans le domaine médical et plus particulièrement dans le contexte de la simulation ou de la synthèse d'images virtuelles, et a pour objet un procédé et un système de simulation ou de synthèse numérique d'images échographiques, planes ou non.

Afin de former ses étudiants, la médecine moderne commence à se doter de simulateurs médicaux de plus en plus perfectionnés.

Les simulateurs ont fait leurs preuves dans les domaines militaires et aéronautiques et offrent un nombre assez important d'avantages :
le simulateur ne monopolise pas de matériel utile à l'activité réelle,
la diversité des simulations est très importante, depuis la situation courante jusqu'aux cas rares,
des aides impensables en formation traditionnelle peuvent être mises en place : regarder toutes ou partie de ses actions d'un point de vue identique ou différent, ou pouvoir recommencer la partie non satisfaisante de la simulation autant de fois que nécessaire,
la simulation permet une évaluation fiable et objective des aptitudes acquises. Et surtout, elle permet de simuler des situations dans lesquelles les risques sont très élevés pour des débutants et/ou le patient.

Ainsi, et pour permettre notamment lors de séances d'entraînement à des chirurgiens de contrôler le positionnement et le déplacement d'instruments dans le corps d'un patient, un besoin existe pour un procédé et un outil susceptible de synthétiser des images échographiques en temps réel ou quasi temps réel.

Par exemple, un article rédigé par Jensen J A et al, "Fast simulation of ultrasound images", Proceedings of the 2000 IEEE Ultrasonics Symposium, Piscataway, NJ, USA, vol. 2, 2000, pages 1721-1724, divulgue un simulateur d'images échographiques qui repose sur des images volumiques de tomodensitométrie (TDM). Le simulateur nécessite un pré-traitement des données TDM, en plaçant des "noyaux de réfraction" dans le volume TDM.

L'échographie, dont la technique et les caractéristiques sont bien connues de l'homme du métier, présente beaucoup d'avantages par rapport aux autres techniques d'imagerie : elle n'est pas nocive à haute dose comme la radiographie et le scanner, le coût des appareils et celui des examens est moins élevé, et l'encombrement des échographes est faible. De plus, dans la grande majorité des cas, avant de prescrire un examen plus poussé comme une Imagerie par résonance magnétique, une échographie de la zone impliquée dans la pathologie du patient est effectuée. Enfin, l'acquisition rapide des images lui confère un caractère dynamique très intéressant pour l'observation ou le guidage. Le principe de l'invention repose sur la transformation directe d'images par résonance magnétique nucléaire RMN (ou RMN), ci-après également dénommées Imagerie par résonance Magnétique (ou IRM), en images échographiques. Afin de comprendre l'invention, il est donc nécessaire de décrire succinctement les principes de ces différentes images.

L'Imagerie par Résonance Magnétique (IRM) est une technique de diagnostic qui fournit des images en coupe de grande précision anatomique sans utilisation de rayons X ni d'autres radiations. L'IRM est basée sur le phénomène physique de résonance magnétique nucléaire (RMN). Elle utilise les propriétés de la matière et ne concerne que les noyaux d'hydrogène, très abondants dans le corps humain. Un aimant cylindrique creux fournit un champ magnétique intense (typiquement de 1 à 3 Tesla) environ 60 000 fois supérieur au champ magnétique terrestre. Ce champ magnétique fait apparaître au sein des différents tissus de l'organisme une aimantation qui est due aux noyaux d'hydrogène, comme si chaque noyau se comportait comme une petite boussole. Le phénomène de résonance magnétique permet de mesurer cette aimantation. Pour cela, on perturbe les noyaux d'hydrogène en émettant vers le patient une onde électromagnétique. Sous l'effet de cette impulsion, les noyaux d'hydrogène font basculer leur aimantation par rapport à la direction du champ magnétique. A la fin de l'impulsion, l'aimantation revient à sa position d'équilibre : c'est le retour de l'aimantation à cet état d'équilibre qui est mesuré. Les images obtenues seront très différentes selon les réglages de l'appareil choisi et le type d'information recherché. Les principales images dépendront ainsi de la pondération qui pourra être de type T1 (calcul de la relaxation selon l'axe longitudinale de l'aimantation), ou T2 (calcul de la relaxation selon l'axe transversale de l'aimantation), en densité de protons, en mode FLAIR (FLuid Attenuation Inversion Reconvery), en T2*, chacune des ces images pouvant être réalisée en mode écho de Spin ou écho de gradient. Quelque soient les réglages, c'est bien la présence des noyaux d'hydrogène et donc d'eau dans l'image qui caractérisera ces images. Les niveaux de gris varieront ainsi en fonction de cette densité, mais seront très variables d'une image à une autre. Le temps de relaxation des structures traversées étant déterminant pour le niveau de gris finale dans l'image IRM, il est important de noter que ce temps de relaxation sera d'autant plus faible que les structures visualisées seront dense et présenteront peu d'eau. A l'inverse, l'eau aura un temps de relaxation très élevée.

Le tableau ci-après indique, à titre d'exemples, pour différents milieux, l'intensité correspondante dans une image IRM obstétrique de type T2. Il est bien entendu que ces valeurs sont très dépendantes du réglage des appareils et des conditions et du mode d'acquisition.

| Milieu | Exemple d'intensité dans une image T2 |
|---|---|
| Air | 15 |
| Liquide amniotique | 50 |
| Os | 120 |
| Foie | 190 |
| Peau foetus | 250 |
| Peau mère | 500 |

L'échographie est, quant à elle, une technique d'imagerie médicale qui utilise les ultrasons pour obtenir une image de l'intérieur du corps. La sonde de l'échographe envoie des ultrasons qui reviennent à la sonde, après s'être réfléchis sur l'organe que l'on veut étudier, afin d'être traités par un ordinateur. L'image échographique est donc une image par réflexion. La réflexion du faisceau ultrasonore se fait sur des interfaces constituées par des tissus ayant des impédances acoustiques différentes et aussi dans une moindre mesure sur les irrégularités de ces tissus du fait de la dispersion. Les impulsions ultrasonores obéissent aux mêmes lois de propagation, réflexion et réfraction que celles de l'optique. Enfin, le faisceau ultrasonore est atténué en fonction de la nature des organes qu'il traverse.

Les paramètres déterminants dans la propagation des sons dans les différents milieux sont la densité ou masse volumique (d) et la vitesse de propagation des sons (v).

L'impédance acoustique (Z) est définie par le produit de ces deux caractéristiques du milieu: Z = d x v. Le tableau ci-après indique les impédances acoustiques pour différents milieux présents dans tout corps humain ou animal.

| Milieu | Impédance acoustique (kg . m⁻² . s⁻¹) x 10⁶ |
|---|---|
| Air | 0,0004 |
| Poumon | 0,26 |
| Squelette | 3,8 - 7,4 |
| Tissus mous | 1,3 - 1,7 |
| Eau | 1,5 |

Les quatre phénomènes physiques qui entrent en jeu dans le comportement d'une onde ultrasonore sont : la réflexion, la réfraction, l'atténuation et la dispersion.

### a) La réflexion et la réfraction

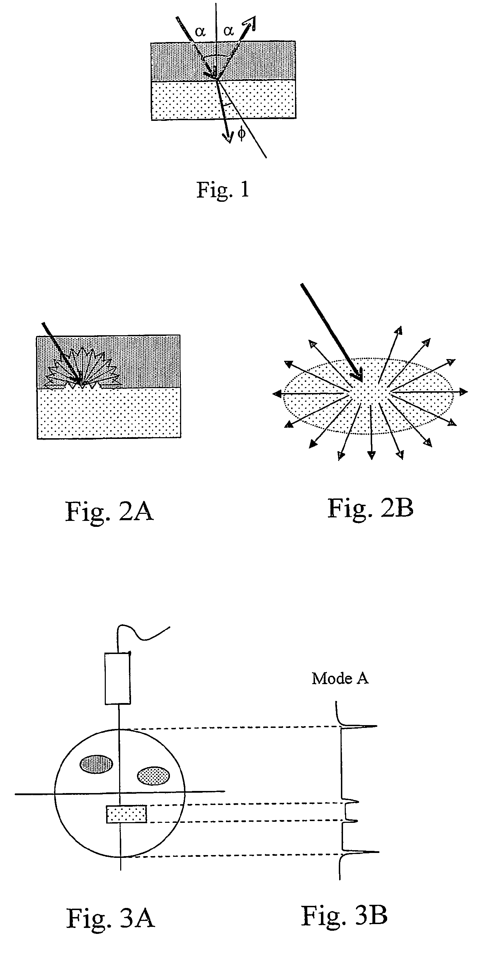

Un écho est un son (onde sonore) qui est réfléchi et qui est réceptionné après un temps de latence, correspondant à son temps de déplacement dans le milieu concerné. Lorsque le faisceau ultrasonore arrive sur une surface réflective avec un angle oblique, une partie du faisceau est réfléchi avec un angle de réflexion égal à l'angle incident. Il s'agit du phénomène de réflexion. La partie transmise est déviée avec un angle qui dépend de la vitesse de propagation des deux milieux concernés. Il s'agit du phénomène de réfraction (voir figure 1 annexée). La proportion d'ultrasons réfléchis, ou coefficient de réflexion, est directement liée à la différence d'impédance acoustique entre les deux milieux. Cette grandeur est caractéristique de la nature des milieux. On se place à incidence normale car dès que l'angle d'incidence est supérieur à 12° l'énergie réfléchie décroît d'un facteur 104 : autant dire que l'on ne capte plus le faisceau réfléchi. On peut calculer à partir des impédances acoustiques quelques coefficients de réflexion pour l'échographie. Les résultats de ces calculs sont indiqués dans le tableau suivant :

| Interface | Coefficient de réflexion en incidence normale |
|---|---|
| Eau / Air | 0,9989 |
| Eau / os | 0,2899 |
| Tissu adipeux / rein | 0,0083 |

Ces valeurs montrent que dans l'organisme, les grandes différences d'impédance acoustique se rencontrent entre les tissus mous et l'air et entre les tissus mous et les tissus durs (os, calculs, corps étrangers). De telles interfaces sont très réfléchissantes ou très "échogènes" (génératrices d'échos). Derrière ces interfaces, une zone d'ombre apparaît puisque le signal sonore a été en grande partie réfléchi.

En échographie, l'interaction du faisceau ultrasonore avec une surface oblique lisse entraîne une disparition du signal, car aucun signal sonore ne revient directement sur la sonde après la réflexion oblique et le faisceau change de direction après la réfraction. Ce phénomène est à l'origine d'un artefact fréquent appelé "ombre de bord". L'influence de l'angle des ultrasons sur l'aspect échographique des structures organiques observées est plus ou moins marquée. Les tendons et les ligaments font partie des structures dites anisotropiques pour lesquelles l'aspect échographique est fortement influencé par la direction du faisceau d'ultrasons.

De plus, la combinaison de la réflexion et de la réfraction de l'onde pourra induire des rebonds multiples entre la sonde et l'interface créant en arrière de l'interface des échos fantômes appelés "échos de répétition", les échos se retrouvant piégés entre deux interfaces réfléchissantes avant de revenir vers la sonde échographique.

### b) L'atténuation

L'atténuation est la perte d'intensité du signal échographique en fonction de la profondeur de pénétration des tissus et de leurs compositions. L'échographe va automatiquement compenser cette diminution en amplifiant le signal reçu de manière à annuler l'atténuation qu'aurait subi l'onde ultrasonore si elle n'avait traversé que des tissus mous. Dans le cas où les tissus traversés par le faisceau ultrasonographique n'ont pas les caractéristiques d'atténuation des tissus mous, il y a soit un renforcement (c'est le cas pour un liquide, qui va posséder un pouvoir atténuateur moindre que celui des tissus mous), soit l'apparition de cônes d'ombres (c'est le cas pour de l'os ou du gaz, qui vont posséder un pouvoir atténuateur supérieur à celui des tissus mous).

Néanmoins, l'atténuation du signal ne peut être compensée que jusqu'à une certaine limite à partir de laquelle le signal n'est plus suffisamment significatif par rapport au bruit. Le tableau ci-après indique, pour différentes fréquences, la profondeur d'exploration maximale des ultrasons.

| Fréquence des ultrasons | Profondeur d'exploration maximale |
|---|---|
| 2,5 - 3,5 MHz | >15cm |
| 5 MHz | 10 cm |
| 7,5 MHz | 5-6 cm |
| 10 - 12 MHz | 2-3 cm |

### c) Dispersion

Dans les images échographiques, les milieux hétérogènes sont représentés par des échos de dispersion. L'échogénicité (la faculté à générer des échos) des organes parenchymateux, par exemple, est essentiellement formée par des échos de dispersion, dont l'intensité dépend de l'homogénéité tissulaire (voir figures 2A et 2B annexées).

En conclusion, il s'avère que le traitement du signal effectué par l'ordinateur d'un échographe, afin de construire les images ultrasonores réelles repose sur un certain nombre d'hypothèses :
1) la direction du faisceau ultrasonore est unique
2) il n'y a pas de réflexions multiples
3) l'absorption du milieu est équivalente à celle des tissus mous
4) la vitesse de propagation d'une onde vaut 1540 m/s.

Lorsqu'une ou plusieurs de ces hypothèses sont fausses, des échos parasites, qui ne correspondent pas à une structure réelle, apparaissent sur l'image : ce sont des artefacts. L'information de base d'une image échographique repose de ce fait sur les propriétés de réflexion, de réfraction, d'atténuation et de dispersion des tissus. En tenant compte de ces différents effets, l'image ultrasonore est reconstituée à partir des informations recueillies par la sonde et transmises à l'appareil. Les informations sont traitées par un logiciel complexe qui permet de déterminer la position et l'intensité de l'écho et de représenter l'image (ou le signal) pour une interprétation par l'opérateur.

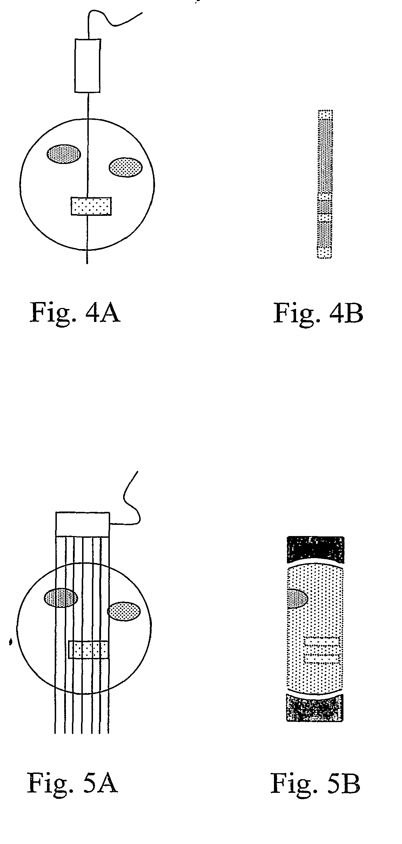

L'image échographique peut enfin être représentée selon plusieurs modes :
- Le premier mode est le mode de représentation de l'image le plus primitif. Il consiste à afficher l'amplitude du signal recueilli par la sonde en fonction de la profondeur (figure 3B). Un seul faisceau ultrasonore de direction constante est utilisé (figure 3A). Ce mode était autrefois utilisé en neurologie pédiatrique et en ophtalmologie.
- Le second mode par brillance, est le mode de représentation le plus commun. Il s'agit de représenter l'intensité du signal non plus par une courbe mais par la brillance d'un point sur écran. Plus le point est brillant, plus la réflexion des ultrasons a été importante et donc, plus l'écho est intense (voir figures 4A et 4B annexées).

Lorsque plusieurs faisceaux ultrasonores parallèles les uns aux autres sont utilisés (sonde linéaire) ou lorsque le même faisceau ultrasonore est orienté dans des directions différentes (sonde sectorielle) on obtient une image en 2 (deux) dimensions (bidimensionnelle) qui représente une coupe de la structure explorée (voir figures 5A et 5B annexées).

En partant du constat fait par les inventeurs, d'une similitude entre la densité de protons d'un tissu visualisable par une image IRM avec l'impédance acoustique de ce même tissu visualisable dans une image échographique, l'invention consiste essentiellement à reproduire par simulation une image échographique reproduisant l'ensemble des effets d'atténuation, de réflexion, de réfraction et de dispersion.

Les principales caractéristiques du procédé selon l'invention ressortent de la revendication 1 annexée et des caractéristiques supplémentaires ressortent des revendications 2 à 9 annexées.

L'invention consiste plus précisément à reproduire des images bidimensionnelles (représentant un ou plusieurs plans échographiques) en simulant plusieurs faisceaux ultrasonores émis depuis une sonde virtuelle contrôlable en position et en orientation et positionnés dans le volume de l'image médicale IRM.

Comme indiqué précédemment, les phénomènes de réflexion importants de l'onde seront observés au niveau d'interfaces entre les liquides ou les tissus mous d'une part et l'air ou les os d'autre part. En fait, les plus importants coefficients de réflexion en incidence normale sont observés entre des structures dont les niveaux de gris peuvent être suffisamment éloignés dans une image IRM selon la séquence d'acquisition choisie. Toute image IRM ne pourra donc pas répondre à ce critère, et seules les images IRM permettant de différencier les différentes structures que l'on cherche à observer seront alors transformables en images échographiques.

Les variations importantes du niveau de gris entre ces différentes structures peuvent être facilement calculées en temps réel le long du rayon lancé dans une telle image IRM. Ce gradient pourra alors être traduit en une réflexion dont l'ordre de grandeur pourra soit être paramétré de façon interactive, soit être calculé automatiquement.

L'intérêt principal de cette méthode mise en oeuvre par l'invention repose ainsi sur la non-nécessité de réaliser une segmentation initiale des organes pour créer une image échographique à partir d'une image IRM sans pré-traitement et en temps réel, ce qui représente un des principaux avantages de l'invention.

Ainsi, l'invention a pour objet un procédé de simulation ou de synthèse numérique d'images échographiques, caractérisé par la transformation directe en temps réel, ou quasi temps réel, des informations contenues dans une image médicale ou vétérinaire de type IRM, sans délimitation ou segmentation des organes ou structures contenus dans le volume de données de l'image IRM, selon une ou plusieurs fenêtres d'observation bidimensionnelles modifiables en temps réel, ou quasi temps réel, en dimension, en position, en direction et en orientation, dont les caractéristiques sont fonction du type d'une sonde échographique virtuelle déterminée, et reproduisant l'ensemble des effets d'atténuation, de réflexion, de réfraction et de dispersion et des effets de réglage d'une image échographique réelle, chaque image échographique fournie cumulant les résultats des simulations des effets précités.

Selon une première caractéristique de l'invention, le procédé réalise avantageusement la simulation d'images échographiques bidimensionnelles dont la fenêtre d'observation est obtenue par la simulation de plusieurs faisceaux ultrasonores, orientés parallèlement entre eux à la manière d'une sonde linéaire ou orientés dans des directions différentes divergentes à la manière d'une sonde sectorielle, correspondant à un ensemble de segments de droite prenant leur origine à une source virtuelle caractérisant la forme, la direction, l'orientation et la dimension de la sonde virtuelle et dont la longueur modifiable permet de simuler la fréquence des ultrasons en déterminant la profondeur d'exploration maximale.

On réalise ainsi dans le volume de données formant l'image IRM tridimensionnelle, une coupe plane avec acquisition des données contenues dans la portion de plan définie par les segments de droites précités, ou par moyennage des données situées de part et d'autre de ladite portion de plan (en cas d'absence de données sur ladite portion de plan), de manière à obtenir une matrice de données bidimensionnelle extraite de ladite image IRM 3D.

Selon une évolution possible de l'invention, il peut aussi être prévu que le procédé réalise la simulation d'images échographiques tridimensionnelles définies par plusieurs fenêtres bidimensionnelles d'observation simulées et orientées avec des décalages différentiels par rapport à la position et à l'orientation de la sonde virtuelle, soit autour de son axe, chaque fenêtre étant alors caractérisée par un angle différent autour de l'axe médian de cette sonde, soit à l'extrémité de cette sonde, chaque fenêtre étant alors caractérisée par un angle différent autour de l'axe perpendiculaire au plan d'observation de cette sonde.

Conformément à l'invention, le procédé consiste préférentiellement à créer un(e) ou plusieurs fenêtre(s) ou espace(s) d'analyse pour la simulation d'images échographiques bidimensionnelles ou tridimensionnelles, fenêtre(s) ou espace(s) défmi(e)(s) par le plan ou le volume dans lequel une onde sonore virtuelle simulée par un ensemble de segments de droite prenant leur origine au niveau de la sonde échographique virtuelle, et représentant au final un rectangle, un disque partiel, un tube ou une portion de sphère centré sur l'origine de la sonde, ce volume variant en fonction du degré de précision de la simulation finale de l'image échographique.

Le procédé comprend avantageusement la simulation des effets de dispersion des ultrasons par les structures traversées présentes dans une image échographique réelle, cette simulation aboutissant à la création d'une image d'absorption limitée à la fenêtre d'observation définie ci-dessus, obtenue par transformation des niveaux d'intensité n contenus dans l'image IRM limitée à la fenêtre ou à l'espace d'analyse également défini(e) précédemment, en niveaux de gris *I(n)* d'une image échographique, par la définition et l'application d'une fonction de transfert *I* simulant les ordres de grandeurs des valeurs d'impédance acoustique des structures traversées, ladite fonction *I* pouvant être continue ou non, linéaire ou non selon la modalité, le type et les caractéristiques de l'image IRM initiale.

De plus, le procédé comprend avantageusement la simulation des effets de réflexion, de réfraction et d'atténuation des ultrasons par les interfaces traversées présentes dans une image échographique réelle, cette simulation aboutissant à la création, d'une part, d'une image d'atténuation simulant les effets d'ombres échographiques et les effets de renforcements échographiques visibles respectivement au delà d'une interface entre un tissu mou ou un liquide et de l'air ou de l'os, et au delà d'une interface entre un liquide et un tissu mou, et, d'autre part, d'un(e) image ou masque d'échos multiples, simulant les effets de réverbération d'un écho ultrasonore à l'intérieur d'un os visible au delà d'une interface entre un tissu mou ou un liquide et de l'os, ces images étant toutes deux limitées à la fenêtre d'observation définie ci-dessus, et obtenues le long des trajets des lancers de rayons orientés (définissant la ou les fenêtre(s) ou espace(s) d'analyse précité(e)(s)) par la détection en temps réel des interfaces calculées par des techniques de seuillages, de gradient et/ou de filtrage des densités de l'image IRM initiale limitée à la fenêtre ou à l'espace d'analyse défini(e) selon la revendication 4.

En outre, le procédé comprend avantageusement la simulation des bruits de dispersion subis par les ultrasons dans les tissus traversés ou de leurs effets. Cette simulation aboutit à la création d'une image limitée à la fenêtre d'observation définie ci-dessus, simulant les effets de réfraction et de dispersion dans une image échographique, obtenue par le calcul des effets de réfraction et de dispersion des tissus traversés par l'onde échographique simulée décrite précédemment, cette simulation étant réalisée soit en définissant un bruit général dans l'image, soit en simulant plus spécifiquement les effets précités en détectant et caractérisant les interfaces entre les différentes structures de la fenêtre d'analyse parcourue.

Enfin, le procédé comprend avantageusement la simulation des effets du réglage de la sonde échographique virtuelle ou simulée, aboutissant à la création d'un(e) image ou masque de réglage limité(e) à la - 11 - fenêtre d'observation définie ci-dessus et simulant les réglages de la luminosité, du contraste, du gain ou de tout autre paramètre réglable de la sonde échographique virtuelle ou simulée tels que définis précédemment.

De manière préférée, le procédé selon l'invention réalise la création d'une image échographique limitée à la fenêtre d'observation définie ci-dessus, et cumulant les résultats des quatre simulations différentes décrites précédemment.

Ainsi qu'il ressort de ce qui précède, le principe à la base de la présente invention consiste, pour réaliser des images échographiques de synthèse, à utiliser directement des images IRM tridimensionnelles, préférentiellement de grande précision, sans effectuer de phase de prétraitement lourde et consommatrice importante de temps et de puissance de traitement.

Pour optimiser le calcul de l'image échographique de synthèse, la propagation des ultrasons peut être modélisée en tant que phénomène unidimensionnel.

A cet effet, une première étape du procédé consiste à réaliser un traçage de rayons volumétrique directement dans l'image IRM tridimensionnelle afin de recueillir tous les voxels se situant dans le plan d'investigation de la sonde virtuelle simulée. Chaque direction de propagation possible pour l'onde ultrasonore correspond à une ligne de l'image bidimensionnelle résultante.

Cette image est alors analysée en vue d'en extraire au moins deux informations différentes.

D'une part, le comportement acoustique de chaque pixel est estimé et, d'autre part, les interfaces coupées ou traversées par les rayons (directions de propagation) sont détectées, identifiées et marquées (tissus mous, os, gaz, liquide, ...).

Ces opérations de traitement peuvent être réalisées à l'état non connecté, éventuellement directement dans l'image IRM.

Sur la base de ces données, au moins trois simulations différentes sont réalisées, à savoir, une simulation des effets de réflexion des ultrasons par les interfaces traversées (réverbération), une simulation des effets d'absorption des ultrasons par les structures traversées (atténuation) et une simulation des effets de dispersion et d'une matrice de bruit, associées à une simulation des réglages de la sonde virtuelle.

La première simulation fournit une image dite "échos multiples", créée en exploitant la connaissance de la nature et de la position des interfaces entre les organes ou les régions de tissus différents. Grâce à cette image, les échos multiples sont détectés et représentés.

La seconde simulation fournit une image d'absorption qui représente l'accumulation des caractéristiques d'absorption des matières et substances le long de l'onde ultrasonore.

La troisième simulation fournit l'image de fond ou de texture de fond, qui est générée en combinant, pour chaque pixel, la valeur lue dans l'image IRM et l'information relative à la nature des tissus concernés et de ses caractéristiques acoustiques. L'image de fond est, en outre, rendue floue en utilisant un bruit généré aléatoirement.

L'image échographique simulée finale est le résultat de la fusion ou de la combinaison des trois images précitées au moins, limitée à une fenêtre d'observation déterminée par la nature et le réglage de la sonde simulée, ladite image résultante étant, en outre, appliquée dans une texture avant son affichage.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 6 représente, sous la forme d'un algorithme, les principales étapes opératoires et de traitement réalisées par le procédé selon l'invention, et
la figure 7 représente de manière schématique un simulateur mettant en oeuvre le procédé selon l'invention.

Cette réalisation se base sur une image IRM obstétrique de type T2. Le but est de simuler une échographie prénatale et les algorithmes décrits ici ont donc été optimisés pour améliorer le rendu des structures propres au foetus. Pour la simulation d'un autre type d'examen ou du même examen basé sur un autre type d'image IRM, ces algorithmes pourront donc être sensiblement différents.

Compte tenu du principe de l'invention, il est nécessaire avant tout de lire l'image médicale ou vétérinaire de type IRM dont le volume de données fournira la base des informations permettant de recréer une échographie virtuelle du sujet observé.

A partir de ce volume de données, le premier module 1 de l'algorithme consiste à simuler la sonde échographique, c'est-à-dire à définir ses propriétés statiques (sonde 2D ou 3D, sonde linéaire ou sectorielle) et ses propriétés variables (position, direction, orientation, fréquence de l'onde émise, gain, contraste, etc....). La mise en oeuvre de ce premier module 1 est nécessaire pour la réalisation de l'invention qui consiste à créer une image échographique virtuelle à partir d'une sonde virtuelle ou simulée.

Le second module 2 (comprenant quatre sous-modules 3, 3', 3", 3"'), qui caractérise plus particulièrement l'invention, consiste à créer l'image échographique que générerait une sonde échographique réelle, dont les paramètres sont fournis par le premier module 1, si elle était réglée en fréquence, localisée, dirigée, orientée et paramétrée selon les informations fournies par le premier module, sur un sujet réel dont une partie des caractéristiques anatomiques sont fournies par l'image IRM.

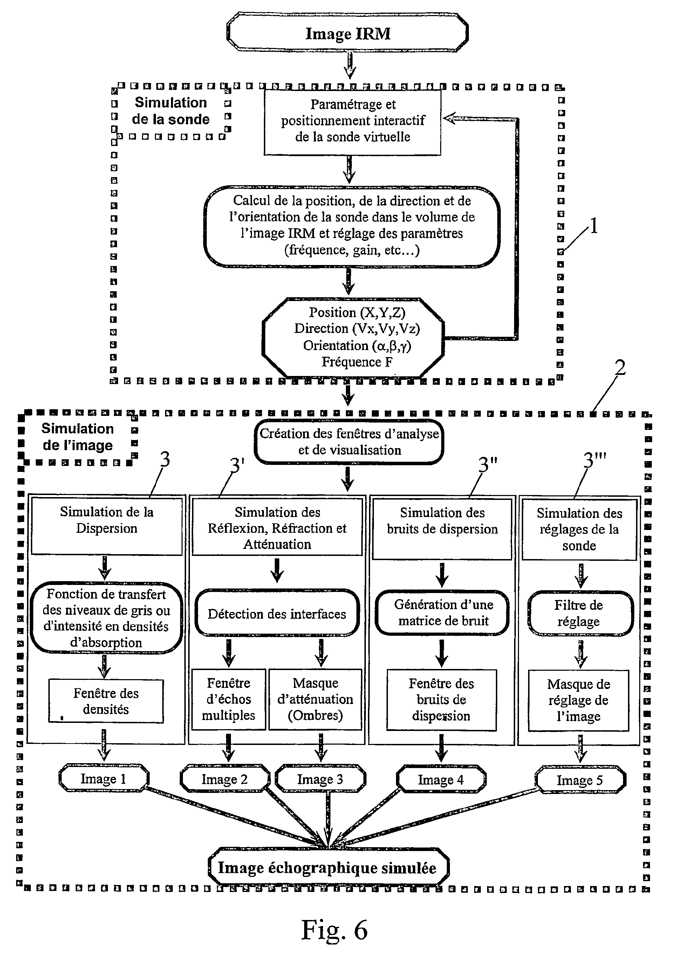

Pour générer cette image, le module 2 de simulation de l'échographie est composé, comme le montre la figure 6 annexée, de quatre principaux sous-modules 3, 3', 3", 3"' réalisant respectivement la dispersion, de la réflexion, de la réfraction et de l'absorption (atténuation), des bruits dus à la réfraction et à la dispersion et des effets dus au réglage de la sonde, comme le gain ou le contraste par exemple.

Avant de simuler ces effets, la première étape de la simulation consiste à définir l'espace restreint dans lequel sera recréé l'image simulée, ainsi que l'espace d'analyse permettant de recréer les effets d'absorption, de réflexion et des bruits de réfraction et de dispersion sur cette image.

Dans le cas d'une image échographique 2D (bidimensionnelle), l'espace de l'image correspondra à un plan limité dans ses dimensions par la dimension de la sonde et la fréquence du signal émis. S'il s'agit d'une sonde linéaire, la forme de cet espace sera un rectangle dont la largeur sera égale à la largeur de la sonde et la longueur dépendra de la fréquence, alors que dans le cas d'une sonde sectorielle, la forme de cet espace sera une section de disque dont le rayon dépendra de la fréquence.

Dans le cas d'une image échographique 3D, l'espace de l'image sera en fait composé de plusieurs espaces 2D de type sectoriel ou linéaire.

L'espace d'analyse correspond pour sa part à la simulation de l'espace de propagation et de retour à la sonde des ondes ultrasonores. Il pourra varier en fonction d'un compromis entre réalisme et vitesse que pourra définir l'utilisateur. Sur un ordinateur peu puissant, on pourra par exemple conserver un espace d'analyse égal à l'espace de l'image, mais dans ce cas, les tissus situés à l'extérieur de l'espace de l'image échographique ne pourront pas influer sur l'image, comme cela peut être le cas dans le cas de la réfraction notamment. Si l'ordinateur est plus puissant, l'élargissement de l'espace d'analyse permettra de ce fait d'améliorer la simulation tout en conservant une génération des images temps réel. Dans l'absolu, il est inutile de conserver les informations au delà de la distance maximale définie par la fréquence des ondes émises par la sonde. La forme de l'espace ainsi généré dépendra là encore du type de sonde utilisé et conduira soit à une portion de sphère (sonde 2D ou 3D linaire ou sectorielle), soit à un cylindre complet (sonde échographique endoluminale).

Ces deux fenêtres étant définies, le premier sous-module 3 consiste à simuler le phénomène de dispersion des tissus traversés par les ondes ultrasonores. Le principe de l'invention consiste, à ce sujet, à simuler ce phénomène en transformant chaque niveau de gris ou d'intensité de l'image IRM en un niveau de gris dans l'image échographique. Pour réaliser cette transformation, on définit une fonction de transfert qui transforme un niveau de gris ou d'intensité n dans l'image IRM en une intensité *I*_{échographique}*(n)* dans l'image échographique. Cette fonction pourra varier selon les caractéristiques de l'acquisition IRM, selon la nature des organes sur lesquels se concentrera la simulation et/ou selon le niveau de réalisme souhaité. Elle pourra par exemple être algébrique ou correspondre à un simple tableau de correspondance de valeurs. Pour certaines modalités d'images IRM (par exemple T2) réalisées sans injection de produit de contraste, une fonction monotone pourra suffire : *I*_{échographique}*(d)* = *coef*d.* Par contre, pour d'autres modalités d'acquisitions, ou si l'image IRM est réalisée avec injection d'un produit de contraste, qui modifie les caractéristiques intrinsèques des tissus, il sera nécessaire de définir une fonction de transfert plus complexe corrigeant la prise de contraste de tissus normalement plus sombres dans l'image IRM.

Evidemment, toute fonction entraînera des erreurs sur certaines valeurs, puisque toute fonction de transfert ne pourra que tenter de simuler l'effet réel de la dispersion sans jamais pouvoir l'égaler puisque, physiquement, les niveaux de gris ou d'intensité d'une image IRM et l'absorption des ondes ultrasonores restent deux phénomènes physiquement non corrélés. Quel que soit le niveau de précision de la fonction de transfert, les approximations qu'elle entraîne pourront dans tous les cas être amoindries par les autres effets de réflexion, de réfraction ou encore de l'absorption. Le résultat final de ce premier sous-module 3 est la définition d'une première image, correspondant à une fenêtre échographique de visualisation en niveaux de gris sans effet.

Le second sous-module 3' a pour objectif de simuler les phénomènes de réflexion, de réfraction et d'atténuation des interfaces définissant les effets liés à ces réflexions, c'est-à-dire les ombres et les échos multiples. Le principe de l'invention consiste, à ce sujet, à simuler ces phénomènes orientés et dirigés en fonction des paramètres de la sonde, c'est-à-dire limité à la fenêtre de visualisation, puis à calculer les réflexions en fonction des variations de niveaux de gris ou d'intensité de l'image IRM. La définition de ces interfaces pourra être réalisée de plusieurs façons : soit par exemple en calculant le gradient de l'image IRM initiale, soit en calculant le gradient de l'image IRM modifiée par une fonction de transfert égale ou différente de la fonction de transfert définie dans le premier sous-module, soit par toute autre méthode permettant d'aboutir à un résultat similaire.

Les interfaces étant définies, le phénomène d'ombre apparaîtra lorsque l'interface sera trop importante, c'est-à-dire lorsque la différence d'inpédance de deux tissus voisins sera trop importante. Pour simuler correctement l'effet d'ombre, il est nécessaire de reprendre les ordres de grandeur des coefficients de réflexion en incidence normale définis dans une image échographique. Ces coefficients montrent qu'une ombre forte sera obtenue dans le cas d'une interface entre de l'air et de l'eau ou un tissu mou, et qu'une ombre moyenne sera obtenue dans le cas d'une interface entre de l'os et de l'eau ou un tissu mou. L'air et l'os ont des niveaux de gris très sombres dans une image IRM puisqu'ils contiennent très peu d'eau et donc très peu de protons, alors que les tissus mous et l'eau pourront avoir des valeurs médianes et élevées de niveaux de gris ou d'intensité dans une image IRM selon la modalité choisie. Le principe de l'invention consistera de ce fait à créer le long du rayon une atténuation forte des densités au delà d'une interface détectée si l'interface est composée de valeurs très faibles dans ce type d'image IRM (correspondant à l'air ou à l'os). Pour caractériser cette atténuation, la simulation de cette ombre aboutira à une image, appelée masque d'atténuation, limitée à la fenêtre de visualisation et dont les valeurs réelles seront comprises entre 0 et 1 afin de pouvoir les multiplier par la valeur de la fenêtre d'absorption. L'atténuation des niveaux de gris de l'image finale sera donc obtenue en multipliant les valeurs initiales par la valeur d'atténuation.

Certaines interfaces peu importantes peuvent aussi engendrer un phénomène d'ombre lorsqu'elles ne sont pas perpendiculaires à la direction du rayon. Conformément au phénomène de réfraction décrit plus haut, celui-ci est en effet dévié de son axe et ne reviendra à la sonde que très affaibli. Ce phénomène, nommé ombre de bord, est très important en échographie obstétrique et est surtout visible au niveau du crâne du foetus. Pour simuler correctement ce phénomène, il faut prendre en compte la direction du gradient de l'image afin de déterminer l'orientation de l'interface. Plus celui-ci est oblique, plus le phénomène sera important. Le masque d'atténuation est donc modifié en fonction de ce résultat.

Certaines interfaces peuvent entraîner des effets différents de l'atténuation qui se caractérisent par un renforcement. Le renforcement est un phénomène d'augmentation des niveaux de gris dans la direction d'ondes ultrasonores émises traversant un liquide. Il pourra facilement se traduire par une légère augmentation des densités au delà d'une interface détectée si l'interface est composée de niveaux de gris très élevées dans une image IRM (valeur correspondant à des liquides). Pour caractériser cette augmentation, la simulation de ce renforcement consistera à définir dans le masque de réflexion des valeurs supérieures à 1. Dans les images échographiques, un renforcement entraînera également un effet d'ombre de part et d'autre de la région liquide. Pour caractériser ces ombres, la simulation consistera à définir dans le masque de réflexion des valeurs proche de 0.

Les interfaces importantes pourront enfin créer un effet appelé écho multiple qui correspond à une réplication d'une interface en profondeur dans le même axe des rayons ayant définis l'interface entre un tissu mou ou de l'eau et un os ou un élément solide. Le principe de l'invention consistera de ce fait à créer le long de l'axe de chaque rayon une réplication de l'interface au delà d'une interface détectée si cette interface est composée de niveaux de gris ou d'intensité proches de 0 dans l'image IRM (correspondant à l'os). Pour caractériser cette réplication, la simulation de cet écho multiple aboutira à une image, appelée fenêtre d'écho multiple, limitée à la fenêtre de visualisation et dont les valeurs permettront d'afficher les réplications de l'interface en augmentant les niveaux de gris de l'image échographique. Il pourra donc s'agir d'un masque dont la valeur des pixels sera multipliée par la valeur des niveaux de gris de la fenêtre d'absorption, ou bien d'une image dont la valeur des niveaux de gris sera ajoutée à la valeur des niveaux de gris de la fenêtre d'absorption.

Le troisième sous-module 3" a pour objectif de simuler les phénomènes de bruits de dispersion. Le principe de l'invention consiste, à ce sujet, à simuler ces phénomènes en définissant une image qui permettra de modifier la valeur des niveaux de gris de la fenêtre d'absorption. La simulation de ces phénomènes est sans doute la plus complexe puisqu'ils ne sont pas pris en compte par le logiciel de reconstruction d'une image échographique réelle et sont ainsi caractérisés comme un bruit. Plusieurs méthodes pourront alors être mises en oeuvre en fonction d'un compromis entre le réalisme de l'effet et le temps de traitement pour le réaliser. La méthode la plus simple consiste à calculer un bruit aléatoire qui reproduise une texture comparable au bruit observé dans les images échographiques. Un bruit gaussien orienté dans la normale des rayons lancés issus de la sonde virtuelle fournit ainsi en temps réel une première approximation simple et rapide d'un tel bruit. La méthode la plus complexe consiste à calculer les deux effets indépendamment en tenant compte de leurs caractéristiques.

Le résultat du troisième sous-module 3" sera au final une image ou un masque permettant de modifier les intensités de l'image d'absorption.

Le quatrième sous-module 3"' a pour objectif de simuler les paramètres de réglage de l'image fournie par la sonde échographique. Le principe de l'invention consiste, à ce sujet, à simuler ces réglages qui correspondent généralement au contraste, à la luminosité ou encore à des fonctions de gain plus ou moins complexes, par un masque permettant de modifier l'image échographique simulée. Ces fonctions classiques seront donc traduites en une image, appelée masque de réglage de l'image, limitée à la fenêtre de visualisation et dont les valeurs réelles seront comprises entre 0 et n, afin de pouvoir les multiplier par la valeur de l'image échographique simulée.

Au final, en combinant l'ensemble des images obtenues par chacun de ces sous-modules 3, 3', 3", 3"' (le second sous-ensemble 3" pouvant en fournir deux comme le montre la figure 6 des dessins), soit en ajoutant les niveaux de gris de ces images, soit en les multipliant, selon une fonction pouvant varier selon la définition précise de chacune de ces images (multiplication par un masque, addition par une image), le principe de l'invention consiste à fournir une image échographique simulée reprenant chacun des effets et des réglages d'une image échographique réelle.

Une description plus détaillée d'une réalisation pratique et concrète du procédé et du système selon l'invention, notamment au niveau des modules et sous-modules de l'algorithme, n'est pas nécessaire, l'homme du métier étant aisément apte, à partir des caractéristiques décrites ci-dessus et représentées sur les figures annexées, de reproduire une telle réalisation.

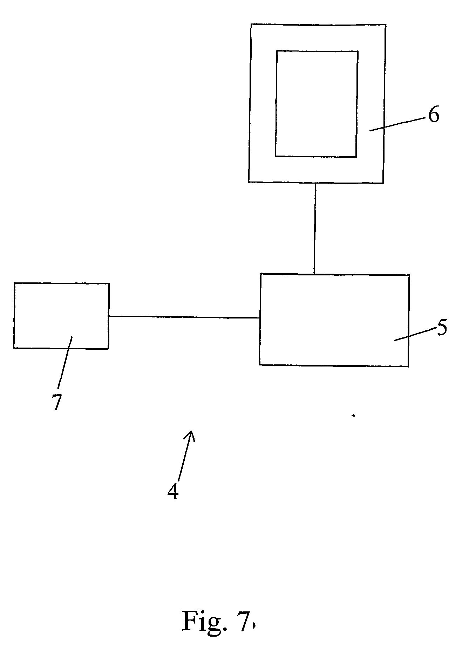

La présente invention a également pour objet, comme le montre schématiquement la figure 7 des dessins annexés, un système 4 de simulation ou de synthèse numérique d'images échographiques ou simulateur échographique temps réel ou quasi temps réel, comprenant au moins une unité 5 de traitement informatique à mémoire, un écran 6 de visualisation d'image(s) et au moins un moyen 7 de commande et de programmation pour un utilisateur.

Ce simulateur est caractérisé en ce qu'il met en oeuvre le procédé de simulation ou de synthèse d'images numériques décrit ci-dessus et en ce que ledit au moins un moyen 7 de commande et de programmation est au moins apte à indiquer à l'unité de traitement 5 le type de sonde échographique virtuelle à simuler, ainsi que, en temps réel ou quasi temps réel, les différents paramètres de réglage et de manipulation de cette sonde par l'utilisateur, et éventuellement l'image médicale ou vétérinaire de type IRM 3D sélectionnée par l'utilisateur parmi plusieurs images disponibles.

De manière avantageuse, ledit au moins un moyen 7 de commande et de programmation comprend une interface à retour de force ou d'effort permettant de simuler les caractéristiques de positionnement de la sonde par rapport au sujet virtuel. De telles interfaces sont parfaitement connues de l'homme du métier.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention. En particulier, les traitements affectés au niveau de chacun des sous-modules du second module peuvent éventuellement être remplacés par des traitements alternatifs différents aboutissant à des résultats similaires ou identiques.

De plus, comme indiqué précédemment, le procédé selon l'invention peut s'appliquer autant pour la simulation d'images échographiques bidimensionnelles, que tridimensionnelles (reconstruites à partir d'images bidimensionnelles).

## Revendications

1. Procédé de simulation ou de synthèse numérique d'images échographiques à partir d'images d'imagerie par résonance magnétique, IRM, comprenant une transformation directe en temps réel, ou quasi temps réel, des informations contenues dans une image médicale ou vétérinaire de type IRM en une image échographique correspondante, ce sans délimitation ou segmentation des organes ou structures contenus dans le volume de données de l'image IRM, et selon une ou plusieurs fenêtres d'observation bidimensionnelles modifiables en temps réel, ou quasi temps réel, en dimension, en position, en direction et en orientation, dont les caractéristiques sont fonction du type d'une sonde échographique virtuelle déterminée, ladite transformation consistant à réaliser au moins trois simulations différentes, à savoir une simulation des effets de réflexion des ultrasons par les interfaces traversées, une simulation des effets d'absorption des ultrasons par les structures traversées et une simulation des effets de dispersion et d'une matrice de bruit, associées à une simulation des réglages de la sonde virtuelle, et chaque image échographique fournie cumulant les résultats des simulations précitées et reproduisant l'ensemble des effets d'atténuation, de réflexion, de réfraction et de dispersion et des effets de réglage d'une image échographique réelle.

2. Procédé selon la revendication 1, **caractérisé par** la simulation d'images échographiques bidimensionnelles dont la fenêtre d'observation est obtenue par la simulation de plusieurs faisceaux ultrasonores, orientés parallèlement entre eux à la manière d'une sonde linéaire ou orientés dans des directions différentes divergentes à la manière d'une sonde sectorielle, correspondant à un ensemble de segments de droite prenant leur origine à une source virtuelle caractérisant la forme, la direction, l'orientation et la dimension de la sonde virtuelle et dont la longueur modifiable permet de simuler la fréquence des ultrasons en déterminant la profondeur d'exploration maximale.

3. Procédé selon la revendication 2, **caractérisé par** la simulation d'images échographiques tridimensionnelles définies par plusieurs fenêtres bidimensionnelles d'observation simulées et orientées avec des décalages différentiels par rapport à la position et à l'orientation de la sonde virtuelle, soit autour de son axe, chaque fenêtre étant alors **caractérisée par** un angle différent autour de l'axe médian de cette sonde, soit à l'extrémité de cette sonde, chaque fenêtre étant alors **caractérisée par** un angle différent autour de l'axe perpendiculaire au plan d'observation de cette sonde.

4. Procédé selon la revendication 2 ou 3, **caractérisé par** la création d'un(e) ou de plusieurs fenêtres ou espaces d'analyse pour la simulation d'images échographiques bidimensionnelles ou tridimensionnelles, défini(e)(s) par le plan ou le volume dans lequel une onde sonore virtuelle simulée par un ensemble de segments de droite prenant leur origine au niveau de la sonde échographique virtuelle, et représentant au final un rectangle, un disque partiel, un tube ou une portion de sphère centré sur l'origine de la sonde, ce volume variant en fonction du degré de précision de la simulation finale de l'image échographique.

5. Procédé selon les revendications 2 et 4, **caractérisé par** la simulation des effets de dispersion des ultrasons par les structures traversées présentes dans une image échographique réelle, cette simulation aboutissant à la création d'une image d'absorption limitée à la fenêtre d'observation définie selon la revendication 2, obtenue par transformation des niveaux d'intensité n contenus dans l'image IRM limitée à la fenêtre ou à l'espace d'analyse défini(e) selon la revendication 4, en niveaux de gris *I(n)* d'une image échographique, par la définition et l'application d'une fonction de transfert *(I)* simulant les ordres de grandeurs des valeurs d'impédance acoustique des structures traversées, ladite fonction *(I)* pouvant être continue ou non, linéaire ou non selon la modalité, le type et les caractéristiques de l'image IRM initiale.

6. Procédé selon les revendications 2 et 4, **caractérisé par** la simulation des effets de réflexion, de réfraction et d'atténuation des ultrasons par les interfaces traversées présentes dans une image échographique réelle, cette simulation aboutissant à la création, d'une part, d'une image d'atténuation simulant les effets d'ombres échographiques et les effets de renforcements échographiques visibles respectivement au delà d'une interface entre un tissu mou ou un liquide et de l'air ou de l'os, et au delà d'une interface entre un liquide et un tissu mou, et, d'autre part, d'un(e) image ou masque d'échos multiples, simulant les effets de réverbération d'un écho ultrasonore à l'intérieur d'un os visible au delà d'une interface entre un tissu mou ou un liquide et de l'os, ces images étant toutes deux limitées à la fenêtre d'observation définie selon la revendication 2, et obtenues le long des trajets des lancers de rayons orientés selon la revendication 4 par la détection en temps réel des interfaces calculées par des techniques de seuillages, de gradient et/ou de filtrage des densités de l'image IRM initiale limitée à la fenêtre ou à l'espace d'analyse défini(e) selon la revendication 4.

7. Procédé selon les revendications 2 et 4, **caractérisé par** la simulation des bruits de dispersion subis par les ultrasons dans les tissus traversés, ou le cas échéant de leurs effets, cette simulation aboutissant à la création d'une image limitée à la fenêtre d'observation définie selon la revendication 2, simulant les effets de réfraction et de dispersion dans une image échographique, obtenue par le calcul des effets de réfraction et de dispersion des tissus traversés par une onde échographique simulée selon la revendication 4, cette simulation étant réalisée soit en définissant un bruit général dans l'image, soit en simulant plus spécifiquement les effets précités en détectant et caractérisant les interfaces entre les différentes structures de la fenêtre d'analyse parcourue.

8. Procédé selon les revendications 2 et 4, **caractérisé par** la simulation des effets du réglage de la sonde échographique virtuelle ou simulée, aboutissant à la création d'un(e) image ou masque de réglage limité(e) à la fenêtre d'observation définie selon la revendication 2 et simulant les réglages de la luminosité, du contraste, du gain ou de tout autre paramètre réglable de la sonde échographique virtuelle ou simulée tels que définis dans les revendications 1 à 3.

9. Procédé selon les revendications 5 à 8, **caractérisé par** la création d'une image échographique limitée à la fenêtre d'observation définie selon la revendication 2, et cumulant les résultats des simulations selon les revendications 5 à 8.

10. Simulateur échographique en temps réel ou quasi temps réel comprenant au moins une unité de traitement informatique à mémoire, un écran de visualisation d'image(s) et au moins un moyen de commande et de programmation pour un utilisateur,
simulateur **caractérisé**
**en ce qu'**il met en oeuvre le procédé selon l'une quelconque des revendications 1 à 9,
**en ce que** ladite au moins une unité de traitement informatique (5) à mémoire est apte à réaliser une transformation directe des informations contenues dans une image médicale ou vétérinaire de type IRM en une image échographique correspondante, ladite transformation consistant à réaliser au moins trois simulations différentes, à savoir une simulation des effets de réflexion des ultrasons par les interfaces traversées, une simulation des effets d'absorption des ultrasons par les structures traversées et une simulation des effets de dispersion et d'une matrice de bruit, associées à une simulation des réglages de la sonde virtuelle,
et **en ce que** ledit au moins un moyen (7) de commande et de programmation est au moins apte à indiquer à l'unité de traitement informatique (5) le type de sonde échographique virtuelle à simuler, ainsi que, en temps réel ou quasi temps réel, les différents paramètres de réglage et de manipulation de cette sonde par l'utilisateur et, le cas échéant, l'image médicale ou vétérinaire de type IRM 3D sélectionnée par l'utilisateur parmi plusieurs images disponibles.

11. Simulateur selon la revendication 10, **caractérisé en ce que** ledit au moins un moyen (7) de commande et de programmation comprend une interface à retour de force ou d'effort permettant de simuler les caractéristiques de positionnement de la sonde par rapport au sujet virtuel.

## Claims

1. Process for simulation or for digital synthesis of sonographic or echographic images from MRI (Magnetic Resonance Imagery) images, comprising a direct transformation in real time, or quasi-real time, of information contained in a MRI medical or veterinary image into a corresponding sonographic or echographic image, without delimitation or segmentation of the organs or structures that are contained in the volume of data of the MRI image, and according to one or more two-dimensional observation windows that can be modified in real time, or quasi-real time, in dimension, in position, in direction and in orientation, whose characteristics are based on the type of a determined virtual sonographic or echographic probe, said transformation consisting in realising at least three different simulations, namely a simulation of the effects of reflection of the ultrasounds or ultrasonics by the interfaces that are passed through, a simulation of the effects of absorption of the ultrasounds or ultrasonics by the structures that are passed through and a simulation of the effects of dispersion and a noise matrix, associated with a simulation of the settings of the virtual probe, each resulting sonographic or echographic image combining the results of the aforementioned simulations and reproducing all of the effects of attenuation, reflection, refraction and dispersion and effects of adjusting a real sonographic image.

2. Process according to claim 1, **characterized by** the simulation of two-dimensional sonographic images whose observation window is obtained by the simulation of several ultrasonic beams, oriented parallel to one another in the manner of a linear probe or oriented in various divergent directions in the manner of a sector probe, corresponding to a set of straight segments that originate from a virtual source characterizing the shape, the direction, the orientation and the dimension of the virtual probe and whose modifiable length makes it possible to simulate the frequency of the ultrasound by determining the maximum exploration depth.

3. Process according to claim 2, **characterized by** the simulation of three-dimensional sonographic images defined by several two-dimensional observation windows that are simulated and oriented with differential offsets relative to the position and the orientation of the virtual probe, either around its axis, whereby each window is then **characterized by** a different angle around the median axis of this probe, or at the end of this probe, whereby each window is then **characterized by** a different angle around the axis that is perpendicular to the plane of observation of this probe.

4. Process according to claim 2 or 3, **characterized by** the creation of one or more analysis windows or spaces for the simulation of two-dimensional or three-dimensional sonographic images, defined by the plane or the volume in which a virtual acoustic wave that is simulated by a set of straight segments originates at the virtual sonographic probe and ultimately represents a rectangle, a partial disk, a tube or a spherical portion centered on the origin of the probe, whereby this volume varies based on the degree of precision of the final simulation of the sonographic image.

5. Process according to claims 2 and 4, **characterized by** the simulation of the effects of dispersing ultrasound via the structures that are passed through and that are present in a real sonographic image, whereby this simulation results in the creation of an absorption image that is limited to the observation window that is defined according to claim 2, obtained by transformation of the intensity levels n contained in the MRI image that is limited to the analysis window or to space that is defined according to claim 4, at the gray level I(n) of a sonographic image, by the definition and the application of a transfer function (I) simulating the orders of magnitudes of the acoustic impedance values of the structures that are passed through, whereby said function (I) may or may not be continuous, or may or may not be linear according to the methods, the type and the characteristics of the initial MRI image.

6. Process according to claims 2 and 4, **characterized by** the simulation of the effects of reflection, refraction and attenuation of the ultrasound by the interfaces that are passed through and that are present in a real sonographic image, whereby this simulation results in the creation, on the one hand, of an attenuation image that simulates the effects of sonographic shadows and the effects of sonographic reinforcements that are visible respectively beyond an interface between a wet tissue or a liquid and air or bone, and beyond an interface between a liquid and a wet tissue, and, on the other hand, an image or mask of multiple echoes, simulating the effects of reverberation of an ultrasonic echo inside a bone that is visible beyond an interface between a wet tissue or a liquid and bone, whereby these images are both limited to the observation window that is defined according to claim 2 and obtained along the trajectories of ray tracings that are oriented according to claim 4 by the detection in real time of interfaces that are calculated by thresholding, gradient and/or filtering techniques of the densities of the initial MRI image that is limited to the analysis window or to space that is defined according to claim 4.

7. Process according to claims 2 and 4, **characterized by** the simulation of the dispersion noises that the ultrasound experiences in the tissues through which it passes or, if necessary, the effects of these noises, whereby this simulation results in the creation of an image that is limited to the observation window that is defined according to claim 2, simulating the effects of refraction and dispersion in a sonographic image, obtained by the calculation of the effects of refraction and dispersion of the tissues through which the simulated sonographic wave, according to claim 4, passes, whereby this simulation is carried out either by defining a general noise in the image or by simulating more specifically the above-mentioned effects by detecting and characterizing the interfaces between the different structures of the analysis window through which the sound passes.

8. Process according to claims 2 and 4, **characterized by** the simulation of the effects of adjusting the virtual or simulated sonographic probe, resulting in the creation of an image or mask for limited adjustment to the observation window that is defined according to claim 2 and simulating the adjustments of luminosity, contrast, gain or any other adjustable parameter of the virtual or simulated sonographic probe as defined in claims 1 to 3.

9. Process according to claims 5 to 8, **characterized by** the creation of a sonographic image that is limited to the observation window that is defined according to claim 2 and that accumulates the results of the simulations according to claims 5 to 8.

10. A real-time or quasi-real time sonographic simulator, comprising at least one computer processing unit with memory, a screen for visualizing an image and at least one means for control and programming for a user,
simulator **characterized in that** it implements the process according to any of claims 1 to 9,
**in that** said at least one processing unit (5) with memory is able to realise a direct transformation of the information contained in a MRI medical or veterinary image into a corresponding sonographic or echographic image, said transformation consisting in realising at least three different simulations, namely a simulation of the effects of reflection of the ultrasounds or ultrasonics by the interfaces that are passed through, a simulation of the effects of absorption of the ultrasounds or ultrasonics by the structures that are passed through and a simulation of the effects of dispersion and a noise matrix, associated with a simulation of the settings of the virtual probe, and **in that** said at least one means (7) for control and programming is at least able to indicate to the processing unit (5) the type of virtual sonographic probe to simulate as well as, in real time or quasi-real time, the different parameters for adjusting and handling this probe by the user, and, if necessary, the 3D MRI medical or veterinary image that is selected by the user from among several available images.

11. Simulator according to claim 10, wherein said at least one means (7) for control and programming comprises a force or stress feedback interface that makes it possible to simulate the positioning characteristics of the probe relative to the virtual subject.

## Patentansprüche

1. Verfahren zur Simulation oder digitalen Synthese von echographischen Bildern ausgehend von Kernspinnresonanzbildern, mit einer direkten Transformation in Echtzeit oder Quasi-Echtzeit von Informationen, die in einem medizinischen oder veterinärmedizinischen Bild vom Kernspinnresonanz-Typ enthalten sind, in ein entsprechendes echographisches Bild, ohne Begrenzung oder Segmentierung von Organen oder Strukturen, die in dem Volumen der Kernspinnresonanz-Daten enthalten sind, und entsprechend einem oder mehrerer zweidimensionaler Beobachtungsfenster, die in Echtzeit oder Quasi-Echtzeit hinsichtlich der Abmessung, der Position, der Richtung und der Ausrichtung modifizierbar sind, deren Charakteristiken eine Funktion des Typs einer bestimmten virtuellen Echographie-Sonde sind, wobei die Transformation in der Realisierung von zumindest drei unterschiedlichen Simulationen besteht, nämlich einer Simulation der Effekte einer Reflexion des Ultraschalls durch durchlaufene Grenzflächen, einer Simulation der Effekte der Absorption des Ultraschalls durch durchlaufene Strukturen und eine Simulation der Effekte der Dispersion und einer Störmatrix, die mit einer Simulation der Einstellungen der virtuellen Sonde verbunden sind, wobei jedes gelieferte echographische Bild die Ergebnisse der genannten Simulationsergebnisse kumuliert und die Gesamtheit der Dämpfungs-, Reflexions-, Brechungs- und Dispersionseffekte und der Wirkungen der Einstellungen einer reellen echographischen Bildes wiedergibt.

2. Verfahren nach Anspruch 1, **gekennzeichnet durch** die Simulation von zweidimensionalen echographischen Bildern, deren Beobachtungsfenster **durch** die Simulation mehrerer Ultraschallstrahlen gewonnen wird, die parallel zueinander nach Art einer linearen Sonde oder in unterschiedlichen divergierenden Richtungen nach Art einer Sektor-Sonde ausgerichtet sind, entsprechend einer Gesamtheit von geradlinigen Segmenten, die ihren Ursprung an einer virtuellen Sonde haben und die Form, die Richtung, die Ausrichtung und die Abmessung der virtuellen Sonde charakterisieren und deren modifizierbare Länge eine Simulation der Frequenz der Ultraschallwellen unter Bestimmung der maximalen Untersuchungstiefe ermöglicht.

3. Verfahren nach Anspruch 2, **gekennzeichnet durch** die Simulation dreidimensionaler echographischer Bilder, die **durch** mehrere zweidimensionale Beobachtungsfenster definiert sind, die mit unterschiedlichen Versetzungen bezüglich der Position und der Ausrichtung der virtuellen Sonde simuliert und ausgerichtet sind, entweder um deren Achse herum, wobei jedes Fenster dann durch einen unterschiedlichen Winkel um die Mittelachse dieser Sonde charakterisiert ist, oder an dem Ende dieser Sonde, wobei jedes Fenster dann durch einen unterschiedlichen Winkel um die Achse unter einem rechten Winkel zur Beobachtungsebene dieser Sonde charakterisiert ist.

4. Verfahren nach Anspruch 2 oder 3, **gekennzeichnet durch** die Schaffung von einem oder mehreren Analyse-Fenstern oder Analyse-Räumen für die Simulation von zweidimensionalen oder dreidimensionalen Echographie-Bildern, die durch die Ebene oder das Volumen definiert sind, in der oder in dem eine virtuelle Schallwelle, die **durch** eine Gesamtheit von Segmenten von Geraden simuliert ist, die ihren Ursprung im Bereich der virtuellen Echographie-Sonde haben, und die schließlich ein Rechteck, eine Teil-Scheibe, ein Rohr oder einen Kugelabschnitt darstellen, der auf dem Ursprung der Sonde zentriert ist, wobei sich dieses Volumen in Abhängigkeit von dem Genauigkeitsgrad der abschließenden Simulation des echographischen Bildes ändert.

5. Verfahren nach den Ansprüchen 2 und 4, **gekennzeichnet durch** die Simulation der Dispersion der Ultraschallwellen **durch** die durchlaufenen Strukturen, die in einem tatsächlichen Echographie-Bild vorhanden sind, wobei diese Simulation zu der Schaffung eines Absorptionsbildes führt, das auf das Beobachtungsfenster beschränkt ist, das gemäß Anspruch 2 definiert ist, und **durch** eine Transformation der Intensitätswerte n gewonnen wird, die in dem Kernspinnresonanz-Bild enthalten sind, das auf das Analyse-Fenster oder den Analyse-Raum beschränkt ist, der gemäß Anspruch 4 definiert ist, im Bereich der Graupegel I(n) eines echographischen Bildes, **durch** die Definition und Anwendung einer Übertragungsfunktion (I), die die Größenordnungen der Werte der akustischen Impedanz der durchlaufenen Strukturen simuliert, wobei die Funktion (I) kontinuierlich oder diskontinuierlich, linear oder nichtlinear entsprechend der Modalität, des Typs und den Charakteristiken des Ausgangs-Kernspinnresonanz-Bildes sein kann.

6. Verfahren nach den Ansprüchen 2 und 4, **gekennzeichnet durch** die Simulation der Effekte der Reflexion, der Brechung und der Dämpfung der Ultraschallwellen **durch** die durchlaufenen Grenzflächen, die in einem reellen echographischen Bild vorhanden sind, wobei diese Simulation zu der Schaffung einerseits eines Dämpfungsbildes, das die Effekte der echographischen Schatten und die Effekte der echographischen Verstärkungen simuliert, die jenseits der Grenzfläche zwischen einem Weichgewebe oder einer Flüssigkeit und der Luft oder den Knochen und jenseits einer Grenzfläche zwischen einer Flüssigkeit und einem Weichgewebe sichtbar sind, und andererseits eines Bildes oder einer Maske von mehrfachen Echos führt, wodurch die Effekte des Nachhalts eines Ultraschallechos vom Inneren eines Knochens simuliert werden, der jenseits einer Grenzfläche zwischen dem Weichgewebe oder einer Flüssigkeit und Knochen sichtbar ist, wobei diese Bilder beide auf das Beobachtungsfenster beschränkt sind, das im Anspruch 2 definiert ist, und entlang der Bahnen des Stahlverlaufs gewonnen werden, die gemäß Anspruch 4 ausgerichtet sind, zur Echtzeit-Detektion von Grenzflächen, die durch Techniken der Schwellenwertberechnung, des Gradienten und/oder der Dichtefilterung des Kernspinnresonanz-Ausgangsbildes begrenzt auf das Analyse-Fenster oder dem Analyse-Raum berechnet werden, das beziehungsweise der nach Anspruch 4 definiert ist.

7. Verfahren nach den Ansprüchen 2 und 4, **gekennzeichnet durch** die Simulation von Dispersionsstörungen, die die Ultraschallwellen in den durchlaufenen Geweben erleiden oder gegebenenfalls deren Effekte, wobei diese Simulation zu der Schaffung eines Bildes führt, das auf das Beobachtungsfenster beschränkt ist, das gemäß Anspruch 2 definiert ist und die Effekte der Beugung und der Dispersion in einem Echographie-Bild simuliert, das **durch** die Berechnung der Effekte der Brechung und der Dispersion der durchquerten Gewebe **durch** eine Echographie-Welle erzielt wurde, die gemäß Anspruch 4 simuliert wurde, wobei diese Simulation entweder **durch** Definieren einer allgemeinen Störung in dem Bild oder einer spezielleren Simulierung der genannten Effekte bei der Detektion und Charakterisierung der Grenzflächen zwischen den verschiedenen Strukturen in dem durchlaufenen Analyse-Fenster verwirklicht wird.

8. Verfahren nach den Ansprüchen 2 und 4, **gekennzeichnet durch** die Simulation der Wirkungen der Einstellung der virtuellen oder simulierten Echographie-Sonde, was zu der Schaffung eines Bildes oder einer Maske der Einstellung führt, das oder die auf das Beobachtungsfenster beschränkt ist, das im Anspruch 2 definiert ist, und die Einstellungen der Helligkeit, des Kontrastes, der Verstärkung oder irgendeines anderen einstellbaren Parameter der virtuellen oder simulierten Echographie-Sonde simuliert, wie sie in den Ansprüchen 1 bis 3 definiert ist.

9. Verfahren nach den Ansprüchen 5 bis 8, **gekennzeichnet durch** die Schaffung eines echographischen Bildes, das auf das Beobachtungsfenster beschränkt ist, das gemäß Anspruch 2 definiert ist und die Ergebnisse der Simulierungen nach den Ansprüchen 5 bis 8 kumuliert.

10. Echtzeit- oder Quasi-Echtzeit-Echographie-Simulator, der zumindest eine Datenverarbeitungseinheit mit einem Speicher, einem Bildschirm und zumindest einer Einrichtung zur Steuerung und Programmierung durch einen Benutzer umfasst, wobei der Simulator **dadurch gekennzeichnet ist, dass**:
er das Verfahren nach einem der Ansprüche 1 bis 9 durchführt,
die zumindest eine Datenverarbeitungseinheit (5) mit einem Speicher zur Ausführung einer direkten Transformation der in einem medizinischen oder veterinärmedizinischen Bild vom Kernspinnresonanz-Typ enthaltenen Informationen in ein entsprechendes Echographie-Bild ausgebildet ist, wobei die Transformation in der Ausführung von zumindest drei unterschiedlichen Simulationen besteht, nämlich einer Simulation der Reflexion der Ultraschallwellen durch durchlaufene Grenzflächen, einer Simulation der Absorptions-Effekte der Ultraschallwellen durch die durchlaufenen Strukturen, und einer Simulation der Effekte der Dispersion und einer Störmatrix, verbunden mit einer Simulation der Einstellungen der virtuellen Sonde,
und die zumindest eine Einrichtung zur Steuerung und Programmierung (7) so ausgebildet ist, dass sie an die Datenverarbeitungseinheit (5) eine Angabe des Typs der zu simulierenden virtuellen Echographie-Sonde sowie in Echtzeit oder Quasi-Echtzeit die verschiedenen Parameter der Einstellung und der Manipulation dieser Sonde durch den Benutzer und gegebenenfalls des medizinischen oder veterinärmedizinischen Bildes vom 3D-Kernspinnresonanz-Abtastungs-Typ liefert, das von dem Benutzer aus mehreren verfügbaren Bildern ausgewählt ist.

11. Simulator nach Anspruch 10, **dadurch gekennzeichnet, dass** die zumindest eine Einrichtung (7) zur Steuerung und Programmierung eine Schnittstelle zur Rückmeldung der Kraft oder des Druckes umfasst, die bzw. der eine Simulation der Charakteristiken der Anordnung der Sonde gegenüber einem virtuellen Gegenstand ermöglicht.
